# EUROPEAN PATENT APPLICATION

(11) **EP 2 048 908 A1**
(43) Date of publication of application: **15.04.2009**
(21) Application number: 07253989.3
(22) Date of filing: 09.10.2007
(51) Int. Cl.: H04W 48/16

(54) **Communications method**

(71) Applicant: British Telecommunications Public Limited Company, London EC1A 7AJ (GB)
(72) Inventor: The designation of the inventor has not yet been filed
(74) Representative: Wilson, Peter David

(57) **Abstract**

A method of operating a communications network, the method comprising the steps of: a) establishing a first communications session between a first mobile terminal and a base station, the first communications session being performed using a first wireless communications interface; and b) establishing i) a second communications session between the base station and a second mobile terminal, the second communications session being performed using a second wireless communications interface; ii) a third communications session between the first mobile terminal and the second mobile terminal, the third communications session being performed using a third wireless communications interface; wherein the third wireless communications interface consumes less power from the first mobile terminal than the second wireless communications interface.

## Description

The present invention relates to a method of setting up a communication session, and in particular to a method of setting up a communication session using two mobile terminals.

There is a trend for mobile terminals to comprise multiple communications interfaces, for example GSM for cellular voice connections, WiFi for short-range data connections, UMTS (or other 3G technologies) for cellular broadband connections, Bluetooth, Ultra Wide Band (UWB) etc. For example, in the UK the applicant provides a service called BT Fusion^{™} in which a mobile terminal uses conventional cellular connections but can switch to use VoIP over a WiFi connection when in range of an appropriate WiFi hotspot or WiFi enabled broadband connection. There is a further trend for mobile terminals to incorporate additional components and/or functionalities (cameras, flash facilities, video and/or audio playback, larger colour screens etc.) that lead to an increased power consumption and thus a reduction in the time that a single battery charge can be used to operate the terminal.

EP1768431 discloses a method by which a multimode mobile terminal can determine which one of the available communications interfaces will allow a call to be made whilst reducing power consumption.

According to a first aspect of the present invention there is provided a method of operating a communications network, the method comprising the steps of:
a) establishing a first communications session between a first mobile terminal and a base station, the first communications session being performed using a first wireless communications interface; and
b) establishing
   i) a second communications session between the base station and a second mobile terminal, the second communications session being performed using a second wireless communications interface;
   ii) a third communications session between the first mobile terminal and the second mobile terminal, the third communications session being performed using a third wireless communications interface;
   wherein the third wireless communications interface consumes less power from the first mobile terminal than the first wireless communications interface.

The invention will be described with reference to the following Figures, which are provided by way of explanation only, in which:
Figure 1 shows a schematic depiction of a communications network 100 that enables a method according to the present invention to be carried out: and
Figure 2 shows of a flowchart describing a method according to an embodiment of the present invention.

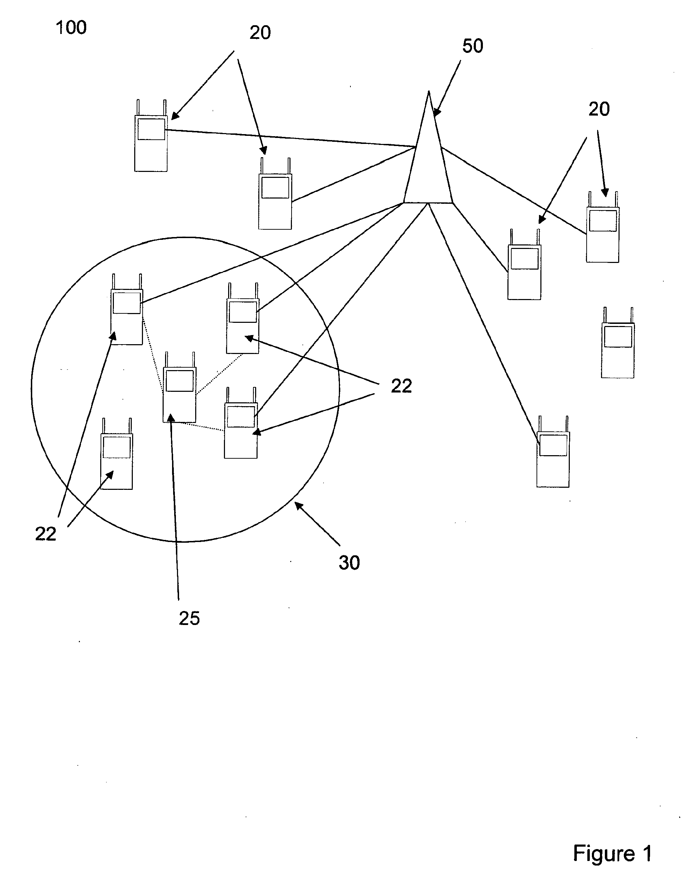

Figure 1 shows a schematic depiction of a communications network 100 that enables a method according to the present invention to be carried out. The network 100 comprises a wireless communication base station 50 which is in wireless communication with a plurality of mobile terminals 20, 22, 25. The mobile terminals 20, 22, 25 communicate with the base station using a wireless communication interface that is appropriate for long-range communications (for example, GSM, UMTS, WiMAX other cellular communications techniques). A consequence of using such a communication interface is that it requires a higher degree of power consumption than a wireless communication interface that is intended for shorter range communications, such as Bluetooth, WiFi, UWB, etc. For the sake of clarity some of the connections between each of the mobile terminals and the base station have been omitted from Figure 1.

A first mobile terminal 25 can be seen to define a personal area network (PAN) 30 which is limited by the effective range of a short range wireless communications interface (such as Bluetooth, UWB, WiFi, etc.). When the first mobile terminal 25 experiences a low battery level then it is possible for a call to be routed to the base station 50 via one of the other mobile terminals 22 which are within the range of the PAN 30 of the mobile terminal 25. The call can be routed to a second mobile terminal 22 using a short range wireless communications interface, with the second mobile terminal relaying the call to the base station 50 using an appropriate long range wireless communications interface. By switching from a long range wireless communications interface to a short range wireless communications interface it is possible for the first mobile terminal 25 to reduce power consumption. This then increases the probability that the call can be completed before the battery is exhausted. It should be understood that the second mobile terminal should be inactive such that the call can be set up using the long range wireless communications interface.

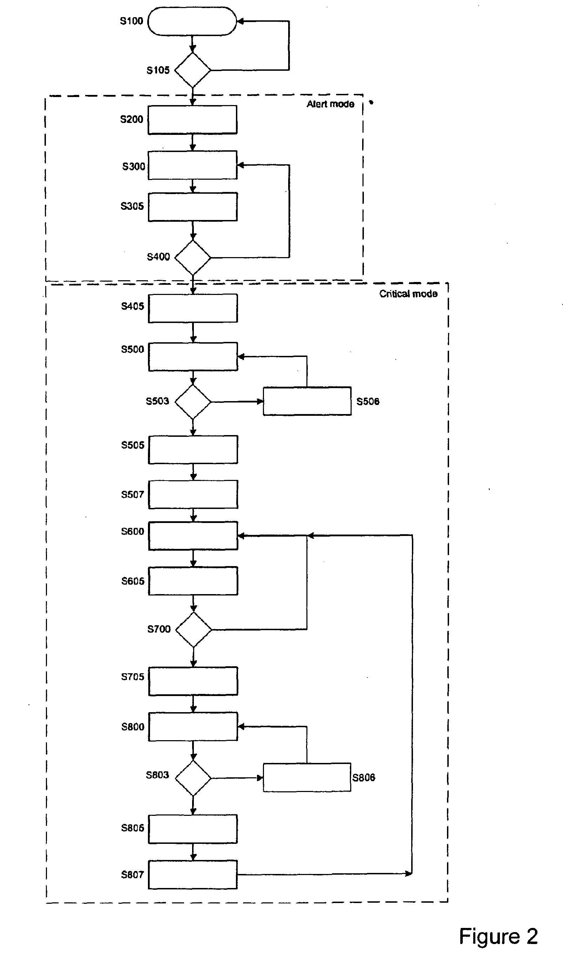

Figure 2 shows of a flowchart describing a method according to an embodiment of the present invention. The process starts at Step 100 where the power level monitoring tool of the first mobile terminal 25 is always aware of its battery status. The first mobile terminal 25 will regularly check if its battery level is close a first threshold (for example 15% power remaining or 30 minutes of predicted operating time remaining) at Step 105. If it is, the first mobile terminal 25 will activate the 'alert mode' at Step 200 (see below) and any on-going or new call/connection may be forwarded/transferred to a second mobile terminal 22 at later stage via low-power radio.

In the alert mode (Step 200), the first mobile terminal performs Step 300 in which it activates one of the short range wireless communications interfaces to scan the surrounding environment and communicate with any mobile terminals 22 that are within the PAN 30 that is defined by the short range wireless communications interface. Any of the mobile terminals 22 within the PAN that are able to satisfy a communication request can respond to the first mobile terminal appropriately. For example, one of the mobile terminals 22 must have the required wireless communication interfaces (which should be idle) and must have sufficient battery power remaining. Other requirements or preferences may be specified by the user of the first mobile terminals. At step 305 the first mobile terminal 25 compiles a list of potential second mobile terminals based on the responses received from the mobile terminals 22 within the PAN and a preferred second mobile terminal is selected. The terminals may be sorted according to some pre-defined preferences (e.g. channel quality, battery level, security, remuneration, etc).

At Step 400, the first mobile terminal continues to monitor the battery level, for example at regular intervals. Due to the nature of mobility, some of the mobile terminals 22 previously within the PAN may have been moved outside the range of the PAN, whilst other mobile terminals may have moved inside the PAN. Hence, the first mobile terminal in alert mode would need to regularly repeat the scanning process 300 and refresh the list of potential second mobile terminals (step 305). When the battery level reaches a predetermined second threshold level (for example less than 10% of power remaining or less than 2 minutes of estimated call time), the 'critical mode' is immediately activated at Step 405 and the process continues to Step 500.

In Step 500, the first mobile terminal transmits a message to the base station 50 that all communications should be handled by a second mobile terminal, i.e. the preferred second mobile terminal identified in step 305. The base station will then immediately initiate and setup basic communications with the preferred second mobile terminal in Step 503 in order to ensure that they can communicate with each other. If successful, the process proceeds to Step 505. Otherwise, the base station informs the first mobile terminal (Step 506) and a further potential second mobile terminal is chosen. Steps 500 and 503 are then repeated until a suitable second mobile terminal is selected.

In Step 505, the base station informs the first mobile terminal that the second mobile terminal is capable of communicating with the base station. The first mobile terminal will then initiate a communications session with the second mobile terminal using an appropriate short range wireless communications interface.

Alternatively, in Step 500 the first mobile terminal transmits a message to the preferred second mobile terminal identified in step 305 terminal, using an appropriate short range wireless communications interface, that further communications are to be routed to the base station. The preferred second mobile terminal will then immediately initiate and setup basic communications with the base station in Step 503 in order to ensure that they can communicate with each other. If successful, the process proceeds to Step 505. Otherwise, the second mobile terminal informs the first mobile terminal (Step 506) of the failure and a further potential second mobile terminal is chosen. Steps 500 and 503 are then repeated until a suitable second mobile terminal is selected and communication can be established with the base station via the second mobile terminal.

The first mobile terminal then proceeds to communicate with the base station at Step 507, using the second mobile terminal as a relay. For downlink communications, the base station transmits to the second mobile terminal using an appropriate long range wireless communications interface: the second mobile terminal then relays the transmission to the first mobile terminal using the short range wireless communications interface. Conversely, for uplink communications the first mobile terminal transmits to the second mobile terminal using the short range wireless communications interface and the second mobile terminal relays the transmission to the base station using the long range wireless communications interface.

Due to the nature of mobility, the second mobile terminal may move out of the range of the PAN of the first mobile terminal, or alternatively the battery level of the second mobile terminal may drop below a predetermined threshold, the user of the second mobile terminal may wish to make a call, etc. Therefore, whilst the first mobile terminal is operating in critical mode, steps 600 and 605 will be performed regularly. Steps 600 & 605 have the same functionality as that of Steps 300 & 305, such that the first mobile terminal scans the other mobile terminals 22 present in the PAN 30 and maintains and updates a list of those mobile terminals which are suitable for use as the second mobile terminal.

In the event that the second mobile terminal is no longer able to assist the first mobile terminal in the communication with the base station then the communication session with the first mobile terminal (using the short range wireless communications interface) will be terminated. The first mobile terminal should be able to establish seamlessly an ad-hoc link with a new second mobile terminal in order to maintain the on-going communications with the base station. At step 700 it is determined whether or not the current second mobile terminal is still capable of maintaining the on-going communications (this may be achieved by the first mobile terminal sending a query to the second mobile terminal, or by the second mobile terminal reporting when it is no longer capable of supporting the communication). If the second mobile terminal can continue communicating, then the Steps 600 and 605 are repeated at regular intervals.

Otherwise, if the second mobile terminal will soon need to terminate the communications link with the first mobile terminal then Step 705 is immediately performed. In Step 705, the second mobile terminal informs the first mobile terminal that the link using the short range wireless communications interface will soon be terminated, and the first mobile terminal will select a new second mobile terminal from the list that was created in the most recent iteration of step 605.

Then, at step 800, the first mobile terminal will inform the base station of the identity of the new second mobile terminal. In response, the base station will (Step 803) initiate communications with the new second mobile terminal to ensure that appropriate communications can be established between the base station and the new second mobile terminal. If this is successful, then at step 805 the base station informs the first mobile terminal that communications have been initiated with the new second mobile terminal such that the first mobile terminal can establish a communications session with the new second mobile terminal using a short range wireless communications interface. Once this session has been established then the first mobile terminal can terminate the short range wireless communications link to the second mobile terminal (and the new second mobile terminal can now be regarded as the second mobile terminal). Again, as described above with respect to Steps 500 & 505, the first mobile terminal may prompt a new second mobile terminal to establish a connection to the base station.

If at Step 803 it is not possible for the base station to initiate communications with the new second mobile terminal then the base station will inform the first mobile terminal of this failure (Step 806). The first mobile terminal will then repeat step 800 in order to select a further potential new second mobile terminal from the list that was created in the most recent iteration of step 605 and send the identity of this terminal to the base station. Once a suitable second mobile terminal has been identified and selected then the base station proceeds to step 805 (as described above).

Once communication has been established between the second mobile terminal and both the first mobile terminal and the base station then the first mobile terminal then proceeds to communicate with the base station at Step 807. For downlink communications, the base station transmits to the second mobile terminal using an appropriate long range wireless communications interface: the second mobile terminal then relays the transmission to the first mobile terminal using the short range wireless communications interface. Conversely, for uplink communications the first mobile terminal transmits to the second mobile terminal using the short range wireless communications interface and the second mobile terminal relays the transmission to the base station using the long range wireless communications interface.

The first mobile terminal will continue to regularly execute steps 600, 605 & 700 to maintain an updated list of potential second mobile terminals and to determine whether the present second mobile terminal is capable of persisting in its role. The first mobile terminal will need to make as many handovers to further second mobile terminals as is necessary until the communication session ends or the battery of the first mobile terminal is drained. If there are no further suitable second mobile terminals to handover to then it will be necessary for the first mobile terminal to recommence communications with the base station using a long range wireless communications interface. In this event, the user should be provided with an audible and/or visual warning to enable the user to be able to terminate the communications session gracefully (if this is possible).

The call forwarding mechanism is not limited for use in 'critical mode' only, as it can also be used to conserve the battery power of the first mobile terminal. According to a further embodiment of the present invention, when a first mobile terminal is in 'alert mode', while still handling an active UMTS voice or video-conferencing session, for example, a background connection (such as, for example, downloading a large file) can be forwarded to a selected or preferred second mobile terminal. Thus, the first mobile terminal does not need to handle multiple UMTS connections as the second mobile terminal downloads the file. Once the download is completed then the second mobile terminal can use UWB (for example) to transfer the file to the first mobile terminal. As communications interfaces such as UWB or Bluetooth use significantly less power than UMTS then this allows the first mobile terminal to make significant savings on battery power.

It will be readily apparent to the person skilled in the art of mobile communications that a great number of variations may be made to the method of the present invention without departing from the scope of the present invention. For example, it will be understood that the specific battery levels that determine whether a mobile terminal is in the alert or critical mode do not affect the operation of a method according to the present invention (with the exception that the first threshold defining the alert mode must be greater than the second threshold defining the critical mode). The battery level may be defined in terms of a percentage of power remaining or in terms of the operating time available for the terminal. It will be also understood that although the invention is aimed at mobile terminals, it is best suited to static or slowly moving mobile terminals. If a mobile terminal moves too quickly relative to the other terminals (for example in a vehicle) then it is unlikely that the group of mobile terminals 22 in the PAN 30 will be sufficiently stable. This will lead to a frequent reselection of the second mobile terminal and may also require a handover from the first & second mobile terminals to a further base station.

The method according to the present invention is suitable for use with any mobile terminal capable of multi-modal communication for example, a mobile telephone, smartphone, Blackberry^{™} device, UMPC, suitably equipped PDA, laptop, etc. It will be understood that a method according to the present invention may be implemented in such a mobile terminal by downloading appropriate software over a communications network. Such software may also be provided on computer readable, such as DVD, CD, USB drive, memory card, etc.

It will also be appreciated that the definition of a short range wireless communication interface against a long range wireless communications interface may be problematic at the margin. For example, the typical range of WiFi using a standard omnidirectional antenna is about 100-200 metres, depending on local conditions, but it is possible to use a focussed antenna that gives a range of several kilometres or more. In general terms, communications interfaces such as WiMAX, GSM, UMTS (and other 3G mobile protocols) will use greater power than communications interfaces such as WiFi or DECT that are used for LANs and shorter range communications or Bluetooth, UWB, infra red communications, etc that are typically used for PANs and very short range communications. Essentially if a first communications interface requires less power than a second communications interface then the first communications interface should be regarded as a short range communications interface and the second communications interface should be regarded as a long range communications interface. It is conceivable that one communications interface may be a short range communications interface in one context but a long range communications interface in a second context. For example, WiFi may be a short range alternative to UMTS whilst UWB may be a short range alternative to WiFi. When determining the power requirements of a particular communications interface it is important to consider the power required to process any packets as well as the power required to transmit them.

For a method according to the present invention to be used, it is necessary that users of mobile terminals volunteer their terminals to be available for use as second terminals. The exact mechanism by which this is achieved is outside the scope of this patent and does not effect the operation of a method according to the present invention. Users may form a self-organised community of users; employees of a business may be joined into a group of users; mobile subscribers may be offered a discount by their network operator to join a user group, etc.

## Claims

1. A method of operating a communications network, the method comprising the steps of:
a) establishing a first communications session between a first mobile terminal and a base station, the first communications session being performed using a first wireless communications interface; and
b) establishing
i) a second communications session between the base station and a second mobile terminal, the second communications session being performed using a second wireless communications interface;
ii) a third communications session between the first mobile terminal and the second mobile terminal, the third communications session being performed using a third wireless communications interface;
wherein the third wireless communications interface consumes less power from the first mobile terminal than the first wireless communications interface.

2. A method according to Claim 1, wherein step b) is initiated when the battery level of the first mobile terminal reaches a threshold value.

3. A method according to Claim 1, wherein the first wireless communication interface is the same as the second wireless communication interface.

4. A method according to Claim 1 comprising the further step of:
c) establishing
iii) a fourth communications session between the base station and a third mobile terminal, the fourth communications session being performed using a fourth wireless communications interface;
ii) a fifth communications session between the first mobile terminal and the third mobile terminal, the fifth communications session being performed using a fifth wireless communications interface;
wherein the fifth wireless communications interface consumes less power from the first mobile terminal than the first wireless communications interface.

5. A method according to Claim 4, wherein step c) is initiated when the battery level of the second mobile terminal reaches a threshold value.

6. A method according to Claim 4, wherein step c) is initiated when the second mobile terminal is no longer within the range of the fifth wireless communications interface.

7. A computer program product, comprising computer executable code for performing a method according to any of Claims 1 to 6.
